# EUROPEAN PATENT APPLICATION

(11) **EP 3 505 997 A1**
(43) Date of publication of application: **03.07.2019**
(21) Application number: 17843592.1
(22) Date of filing: 22.08.2017
(51) Int. Cl.: G02C 7/10, G02B 1/115

(54) **SPECTACLE LENS AND SPECTACLES**

(30) Priority: 22.08.2016 JP 2016161996
(71) Applicant: Hoya Lens Thailand Ltd., Pathumthani 12130 (TH)
(72) Inventor: TAKASHIBA Kenji, Pathumthani 12130 (TH); JAMJAI Nithus, Pathumthani 12130 (TH); PLEANRASI Suparerk, Pathumthani 12130 (TH)
(74) Representative: Hoffmann Eitle
(86) International application number: PCT/JP2017/029977
(87) International publication number: WO 2018/038114

(57) **Abstract**

Provided is a spectacles lens that includes a multilayer film disposed on a surface of a lens base material directly or via one or more other layers, wherein the multilayer film includes a plurality of high refractive index material layers and a plurality of low refractive index material layers, and a thickness of the thickest high refractive index material layer among the plurality of high refractive index material layers is greater than a thickness of the thickest low refractive index material layer among the plurality of low refractive index material layers.

## Description

### [Cross-reference of Related Applications]

This application claims priority of Japanese Patent Application No. 2016-161996 filed on August 22, 2016, the entire disclosure of which is hereby specifically incorporated by reference.

### [Technical Field]

The present invention relates to a spectacle lens and spectacles equipped with the spectacle lens.

### [Background Art]

In general, spectacle lenses have a configuration in which one or more functional films for imparting various functions are provided on a lens base material. For example, by providing a multilayer film on a lens base material, the reflection characteristic of the spectacle lens is controlled (see, for example, Japanese Translation of PCT Application No. 2010-519586 (the entire disclosure of which is hereby incorporated by reference)).

### [Summary of Invention]

Japanese Translation of PCT Application No. 2010-519586 suggests providing a multilayer film, which is described as "multilayer stack" in the same publication, on a base material (refer to claim 1 of Japanese Translation of PCT Application No. 2010-519586). Meanwhile, a high heat resistance of a multilayer film provided on a lens base material of a spectacle lens is desirable from the standpoint of suppressing deterioration of appearance quality of the spectacle lens caused by occurrence of cracks in the multilayer film during storage or use at a high temperature. However, as a result of examining the conventional spectacle lens having a multilayer film such as described in Japanese Translation of PCT Application No. 2010-519586, it was found that such a spectacle lens has a problem regarding the heat resistance of the multilayer film, that is, that improvement of heat resistance is desirable.

An object of one aspect of the present invention is to provide a spectacle lens having a multilayer film excellent in heat resistance.

One aspect of the present invention relates to
a spectacle lens having a multilayer film disposed on a surface of a lens base material directly or via one or more other layers, wherein
the multilayer film includes a plurality of high refractive index material layers and a plurality of low refractive index material layers; and
a thickness of the thickest high refractive index material layer among the plurality of high refractive index material layers is larger than a thickness of the thickest low refractive index material layer among the plurality of low refractive index material layers.

The inventors of the present invention have conducted comprehensive research aimed at improving the heat resistance of a multilayer film provided in a spectacle lens. As a result, a novel finding was made that heat resistance can be improved by making the thickness of the thickest high refractive index material layer among the plurality of high refractive index material layers larger than the thickness of the thickest low refractive index material layer among the plurality of low refractive index material layers. One aspect of the present invention has been completed based on this finding.

According to one aspect of the present invention, it is possible to provide a spectacle lens having a multilayer film excellent in heat resistance.

### [Description of Embodiments]

### [Spectacle Lens]

A spectacle lens according to one aspect of the present invention has a multilayer film disposed on a surface of a lens base material directly or via one or more other layers, wherein the multilayer film includes a plurality of high refractive index material layers and a plurality of low refractive index material layers; and a thickness of the thickest high refractive index material layer among the plurality of high refractive index material layers is larger than a thickness of the thickest low refractive index material layer among the plurality of low refractive index material layers.

Hereinafter, the spectacle lens will be described in greater detail.

### <Multilayer Film>

The spectacle lens has a multilayer film disposed on the surface of a lens base material or via one or more other layers. The multilayer film includes a plurality of high refractive index material layers and a plurality of low refractive index material layers. In the present invention and the present specification, the terms "high" and "low" relating to the high refractive index material layer and the low refractive index material layer are relative notations. That is, the high refractive index material layer is a layer formed of a material having a refractive index higher than the refractive index of the material constituting the low refractive index material layer included in the multilayer film. In other words, the low refractive index material layer is a layer formed of a material having a refractive index lower than the refractive index of the material constituting the high refractive index material layer included in the multilayer film. In the present invention and the present specification, the refractive index refers to the refractive index ne with respect to e-line (wavelength 546.07 nm).

In the present invention and the present specification, the high refractive index material layer and the low refractive index material layer are assumed to be neither cured layers of curable compositions nor layers including resin as a main component (hereinafter also referred to as "resin layer"). The high refractive index material constituting the high refractive index material layer and the low refractive index material constituting the low refractive index material layer are preferably inorganic materials.

The high refractive index material constituting the high refractive index material layer can be exemplified by an oxide selected from the group consisting of zirconium oxide (for example ZrO₂), tantalum oxide (for example Ta₂O₅), titanium oxide (for example TiO₂), aluminum oxide (for example Al₂O₃), yttrium oxide (for example, Y₂O₃), hafnium oxide (for example, HfO₂), and niobium oxide (for example, Nb₂O₅), and mixtures of two or more thereof.

The low refractive index material constituting the low refractive index material layer can be exemplified by an oxide or fluoride selected from the group consisting of silicon oxide (for example, SiO₂), magnesium fluoride (for example, MgF₂) and barium fluoride (for example, BaF₂), and mixtures of two or more thereof.

In the above examples, oxides and fluorides are expressed by stoichiometric composition for convenience, but those having an amount of oxygen or fluorine which is deficient or excessive with respect to the stoichiometric composition can also be used as the high refractive index materials or low refractive index materials.

The refractive index of the high refractive index material constituting the high refractive index material layer is, for example, 1.60 or more (for example, 1.60 to 2.40), and the refractive index of the low refractive index material constituting the low refractive index material layer is, for example, 1.59 or less (for example, in the range of 1.37 to 1.59). However, since the expressions "high" and "low" relating to the high refractive index material layer and the low refractive index material layer are relative, as described above, the refractive indexes of the high refractive index material and the low refractive index material are not limited to these ranges.

The multilayer film includes a plurality of high refractive index material layers and a plurality of low refractive index material layers. That is, the multilayer film includes two or more high refractive index material layers and two or more low refractive index material layers. The two or more high refractive index material layers may be layers of the same high refractive index material or layers of different high refractive index materials. The two or more low refractive index material layers may be layers of the same low refractive index material or layers of different low refractive index materials. In the multilayer film, the thickness of the thickest high refractive index material layer among the plurality of high refractive index material layers is larger than the thickness of the thickest low refractive index material layer among the plurality of low refractive index material layers. This feature constitutes the difference between the multilayer film conventionally provided in the spectacle lens, such as disclosed in Japanese Translation of PCT Application No. 2010-519586, and the multilayer film in the abovementioned spectacle lens. The inventors of the present invention presume that this feature contributes to the improvement of heat resistance of the multilayer film, although the reason therefor is not clearly understood. Layers having the same thickness may be contained in the plurality of high refractive index material layers. For example, in the case where the high refractive index material layers included in the multilayer film have the same thickness, the thickness of one layer of these high refractive index material layers is taken as the maximum thickness of the high refractive index material layer. The same is true for a plurality of low refractive index material layers.

In the present invention and the present specification, "thickness" refers to a physical thickness (physical film thickness). The thickness can be determined by a known film thickness measurement method. For example, the thickness can be determined by converting the optical film thickness measured by the optical film thickness measuring device into the physical film thickness. In the multilayer film, the thickness (hereinafter also referred to as "Ta") of the thickest high refractive index material layer among the plurality of high refractive index material layers is larger than the thickness (hereinafter also referred to as "Tb") of the thickest low refractive index material layer among the plurality of low refractive index material layers. The difference (Ta - Tb) between the thickness Ta and the thickness Tb can be, for example, 1.0 nm or more, preferably 1.5 nm or more, and more preferably 2.0 nm or more. Further, the difference (Ta - Tb) can be, for example, 30.0 nm or less, preferably 25.0 nm or less, more preferably 20.0 nm or less, even more preferably 15.0 nm or less, still more preferably 10.0 nm or less, and even more preferably 5.0 nm or less.

In one embodiment, the total thickness (hereinafter also referred to as "TA") of the plurality of high refractive index material layers included in the multilayer film is preferably larger than the total thickness (hereinafter referred to as "TB") of a plurality of low refractive index material layers. It is also preferable that the difference (TA - TB) between TA and TB be 5.0 nm or more, more preferably 10.0 nm or more, and even more preferably 12.0 nm or more. Further, the difference (TA - TB) can be, for example, 50.0 nm or less, preferably 40.0 nm or less, and more preferably 30.0 nm or less.

Further, in one embodiment, the total thickness of the multilayer film, that is, the sum (TA + TB) of the total thickness TA of the plurality of high refractive index material layers and the total thickness TB of the plurality of low refractive index material layers can be, for example, in the range of 100 nm to 400 nm, preferably in the range of 150 nm to 300 nm, and more preferably in the range of 180 nm to 250 nm.

The high refractive index material layer includes a high refractive index material as a main component, and the low refractive index material layer includes a low refractive index material as a main component. Here, the "main component" is the component which is contained in the largest amount in the layer, usually in an amount of about 50% by mass to 100% by mass, preferably about 90% by mass to 100% by mass based on the mass of the entire layer. Such a layer can be formed by forming a film by using a film forming material (for example, a vapor deposition source) including the high refractive index material or the low refractive index material as a main component. The main components mentioned with respect to the film forming material are the same as described above. The layer and the film-forming material sometimes include a trace amount of impurities which are inevitably mixed, and may also include other components such as other inorganic substances and/or well-known additive ingredients which play a role of assisting film formation within ranges in which the function of the main component is not impaired. Film formation can be performed by a known film formation method, and from the viewpoint of easiness of film formation, the film is preferably formed by vapor deposition. That is, the high refractive index material layer is preferably a vapor deposited film of a high refractive index material, and the low refractive index material layer is preferably a vapor deposited film of a low refractive index material.

The thickness of the thickest high refractive index material layer among the plurality of high refractive index material layers included in the multilayer film is, for example, in the range of 50.0 nm to 120.0 nm, preferably in the range of 70.0 nm to 100.0 nm.

The thickness of the other high refractive index material layers is, for example, in the range of 10.0 nm to 50.0 nm, preferably 10.0 nm to 40.0 nm, and more preferably 15.0 nm to 30.0 nm.

Meanwhile, the thickness of the thickest low refractive index material layer among the plurality of low refractive index material layers included in the multilayer film is smaller than the thickness of the thickest high refractive index material layer and is, for example, in the range of 50.0 nm to 120.0 nm, and preferably 70.0 nm to 100.0 nm.

The thickness of the other low refractive index material layers is, for example, in the range of 5.0 nm to 50.0 nm, preferably 10.0 nm to 40.0 nm, and more preferably 10.0 nm to 30.0 nm.

In the present invention and in the present specification, "vapor deposition" is inclusive of a dry method, for example, a vacuum vapor deposition method, an ion plating method, a sputtering method, and the like. In the vacuum vapor deposition method, an ion beam assist method in which an ion beam is simultaneously irradiated during vapor deposition may be used and this ion beam assist method is preferably employed.

Regarding the deposition conditions, for example, in the case of performing vapor deposition by vacuum vapor deposition, the degree of vacuum in the chamber during vapor deposition is preferably in the range of 5.0 × 10⁻⁵ Pa to 8.0 × 10⁻² Pa, and more preferably in the range of 9.0 × 10⁻³ Pa to 2.2 × 10⁻² Pa. In the case of using the ion beam assist method, as the assist condition, oxygen, argon, nitrogen, or a mixed gas obtained by mixing two or more thereof at an arbitrary ratio can be used as the assist (ionization) gas. The accelerating voltage is preferably in the range of 400 V to 1000 V, and the accelerating current is preferably in the range of 200 mA to 700 mA.

Reducing the number of the high refractive index material layers and the low refractive index material layers included in the multilayer film is advantageous in terms of reduction in thickness and/or weight of the spectacle lens having the multilayer film, improvement in manufacturing efficiency by shortening the film formation time, and reduction in manufacturing cost due to reduced consumption of film forming materials. From the above viewpoints, the total number of the high refractive index material layers and the low refractive index material layers included in the multilayer film is preferably four to six, more preferably four or five, and still more preferably four.

In the present invention and the present specification, when describing the number of the high refractive index material layers and the low refractive index material layers included in the multilayer film and the lamination order of the layers, it is assumed that an indium tin oxide (tin-doped indium oxide; ITO) layer having a thickness of 10.0 nm or less, a tin oxide layer having a thickness of 10.0 nm or less, and a titanium oxide layer having a thickness of 10.0 nm or less are not counted as layers of the multilayer film and are not taken into account when the order of lamination is described even when one or more of these layers is included in the multilayer film. However, one or more layers selected from the group including a tin-doped indium oxide (ITO) layer having a thickness of 10.0 nm or less, a tin oxide layer having a thickness of 10.0 nm or less, and a titanium oxide layer having a thickness of 10.0 nm or less may be included in the multilayer film adjacently to the high refractive index material layer and/or the low refractive index material layer. The thickness of each of the above layers is 10.0 nm or less, for example, 1.0 nm or more. Each of the above layers can generally function as a conductive layer. Including one or more such layers in the multilayer film is preferable in terms of suppressing adhesion of dust and dirt to the surface of the spectacle lens having the multilayer film. The tin-doped indium oxide (ITO) layer is a layer containing ITO as a main component. The same applies to the tin oxide layer and the titanium oxide layer. The main components mentioned with respect to these layers are the same as described above.

In general, a multilayer film having alternating high refractive index material layers and low refractive index material layers can exert a function of controlling the reflection characteristics of a spectacle lens. Such a function is, for example, a function of preventing reflection of light in a specific wavelength region (antireflection property) and a function of selectively reflecting light of a specific wavelength region (reflectivity). The multilayer film included in the spectacle lens can function as a multilayer film capable of exerting the function of controlling such reflection characteristics. The light in a specific wavelength range in which the reflection characteristic is controlled can be exemplified by light in a visible region (wavelength 380 nm to 780 nm), a short wavelength region (wavelength 400 nm to 500 nm) generally called blue light, and ultraviolet region (wavelength 280 nm to 400 nm). The reflection characteristics of the multilayer film can be adjusted by the type, combination, thickness, and the like of the layers included in the multilayer film.

In the present invention and the present specification, the order of lamination of the high refractive index material layers and the low refractive index material layers in the multilayer film is to be described from the side close to the lens base material toward the side far from the lens base material. For example, among the first layer and the second layer, the first layer is closer to the lens base material. In a preferred embodiment, the multilayer film is formed of 4 layers: a high refractive index material layer, which is a first layer/a low refractive index material layer, which is a second layer/a high refractive index material layer, which is a third layer/a low refractive index material layer, which is a fourth layer. In a further preferred embodiment, the high refractive index material layer, which is the third layer is the thickest high refractive index material layer among the plurality of high refractive index material layers included in the multilayer film. Further, in one embodiment, the thickest low refractive index material layer among the plurality of low refractive index material layers is the low refractive index material layer, which is the fourth layer.

Still further preferable embodiments of the multilayer film are presented below.
(1) The multilayer film is formed of 4 layers below: a vapor deposited film of zirconium oxide (high refractive index material layer) as the first layer/a vapor deposited film of silicon oxide (low refractive index material layer) as the second layer/a vapor deposited film of zirconium oxide (high refractive index material layer) as the third layer/a vapor deposited film of silicon oxide (low refractive index material layer) as the fourth layer. In an even more preferable embodiment, the vapor deposited film of zirconium oxide as the third layer is the thickest high refractive index material layer among the plurality of high refractive index material layers included in the multilayer film. In one embodiment, the thickest low refractive index material layer among the plurality of low refractive index material layers is the vapor deposited film of silicon oxide as the fourth layer.
(2) The multilayer film is formed of following 4 layers: a vapor deposited film of niobium oxide (high refractive index material layer) as the first layer/a vapor deposited film of silicon oxide (low refractive index material layer) as the second layer/a vapor deposited film of niobium oxide (high refractive index material layer) as the third layer/a vapor deposited film of silicon oxide (low refractive index material layer) as the fourth layer. In an even more preferable embodiment, the vapor deposited film of niobium oxide as the third layer is the thickest high refractive index material layer among the plurality of high refractive index material layers included in the multilayer film. In one embodiment, the thickest low refractive index material layer among the plurality of low refractive index material layers is the vapor deposited film of silicon oxide as the fourth layer.

As described above, one or more layers selected from the group consisting of a tin-doped indium oxide (ITO) layer having a thickness of 10 nm or less, a tin oxide layer having a thickness of 10 nm or less, and a titanium oxide layer having a thickness of 10.0 nm or less may be included between any two layers of the first layer, the second layer, the third layer, and the fourth layer. Alternatively, the first layer, the second layer, the third layer, and the fourth layer may be arranged adjacently without another layer interposed between the two layers. Thus, in one embodiment, the multilayer film can have the first layer, the second layer, the third layer, and the fourth layer arranged adjacently to each other from the side close to the lens base material toward the far side from the lens base material.

In one embodiment, it is preferable that the multilayer film does not have a layer having a thickness of 75 nm or more and including SiO₂ as a main component as a layer nearest to the lens base material, and it is more preferable that the multilayer film does not have a layer having a thickness of 100 nm or more and including SiO₂ as a main component as a layer nearest to the lens base material.

### <Lens Base Material>

The spectacle lens has the above-described multilayer film disposed on the surface of the lens base material directly or via one or more other layers. The lens base material can be a plastic lens base material or a glass lens base material. The glass lens base material can be, for example, a lens base material made of inorganic glass. As the lens base material, a plastic lens base material is preferable because of light weight and resistance to cracking. Examples of plastics suitable for the plastic lens base material include a styrene resin such as a (meth)acrylic resin, a polycarbonate resin, an allyl resin, an allyl carbonate resin such as a diethylene glycol bisallyl carbonate resin (CR-39), a vinyl resin, a polyester resin, a polyether resin, an urethane resin obtained by reacting an isocyanate compound with a hydroxy compound such as diethylene glycol, a thiourethane resin obtained by reacting an isocyanate compound with a polythiol compound, and a cured product obtained by curing a polymerizable compound including a (thio)epoxy compound having one or more disulfide bonds in a molecule (generally referred to as a transparent resin). As the lens base material, one which is not dyed (colorless lens) may be used, or one which is dyed (dyed lens) may be used. The refractive index of the lens base material is, for example, about 1.50 to 1.75. However, the refractive index of the lens base material is not limited to this range and may be above or below this range.

The spectacle lens can be of various types such as a single focus lens, a multifocal lens, a progressive addition lens, and the like. The type of the lens is determined by the surface shape of both sides of the lens substrate. In addition, the lens base material surface may be any of a convex surface, a concave surface, and a flat surface. In ordinary lens base materials and spectacle lenses, the object-side surface is a convex surface and the eyeball-side surface is a concave surface. However, the present invention is not limited to a configuration in which the object-side surface is a convex surface and the eyeball-side surface is a concave surface.

The surface of the lens base material having the multilayer film may be the object-side surface or the eyeball-side surface or may be both the object-side surface and the eyeball-side surface. In the present invention and the specification, the "object side" is the side located on the object side when spectacles with the spectacle lens are worn by the wearer, and the "eyeball side" is opposite thereto, that is, the side located on the eyeball side when spectacles with the spectacle lens are worn by the wearer. The multilayer film may be located directly on the surface of the lens base material without interposition of other layers or may be located on the lens base material surface with one or more other layers interposed therebetween. Examples of the layer that may be present between the multilayer film and the lens base material include a hard coat layer, a polarizing layer, a dimming layer, and the like. For example, by providing a hard coat layer, the durability (strength) of the spectacle lens can be enhanced. The hard coat layer can be, for example, a cured layer formed by curing a curable composition. In addition, a primer layer may be formed between the multilayer film and the lens base material. The primer layer can be, for example, a layer including a resin as a main component. For various layers such as the hard coat layer and the primer layer, well-known techniques related to spectacle lenses can be used.

Furthermore, it is also possible to provide one or more layers on the multilayer film. Such layers can be exemplified by various functional films such as a water repellent or hydrophilic antifouling layer, an antifogging layer, and the like. For various layers that can be provided on the multilayer film, well-known techniques related to spectacle lenses can also be used.

### [Spectacles]

According to another aspect of the present invention, there can be provided spectacles having the spectacle lens according to one aspect of the present invention and a frame to which the spectacle lens is attached. The spectacle lens has been described hereinabove in detail. Other features of the spectacles are not particularly limited and known techniques can be used.

### [Examples]

Hereinafter, the present invention will be further described with reference to Examples, but the present invention is not limited to the embodiments shown in the Examples.

### [Preparation of Spectacle Lens Having Multilayer Film]

In the tables shown below, No. 1-1 to No. 11-5 are Examples, and C-1 to C-7 are Comparative Examples. Also, No. 1-1 to No. 1-5 are Examples in which multilayer films having the same structure are formed on different lens base materials. The same applies to other Examples such as No. 2-1 to No. 2-5.

The lens base materials used in Examples and Comparative Examples are described hereinbelow.

Lens base material having a refractive index of 1.50: Hilux manufactured by HOYA Corporation

Lens base material having a refractive index of 1.53: Phoenix manufactured by HOYA Corporation.

Lens base material having a refractive index of 1.59: Poly manufactured by HOYA Corporation

Lens base material having a refractive index of 1.60: Eyas manufactured by HOYA Corporation

Lens base material having a refractive index of 1.67: Eynoa manufactured by HOYA Corporation

Lens base material having a refractive index of 1.70: Eyry manufactured by HOYA Corporation

Lens base material having a refractive index of 1.74: Eyvia manufactured by HOYA Corporation.

Any of the lens base materials above is a plastic lens base material in which the object-side surface is convex and the eyeball-side surface is concave.

A hard coat layer (cured layer of a curable composition) was formed on optically finished both sides (optical surfaces) of the lens base material having a refractive index of 1.50 and the lens base material having a refractive index of 1.53, and a multilayer film was thereafter formed on the surface of the hard coat layer on the object side (convex side).

In other lens base materials, a hard coat layer (cured layer of a curable composition) was formed on both optically finished surfaces (optical surfaces), with a primer layer (resin layer) interposed therebetween, and a multilayer film was thereafter formed on the surface of the hard coat layer on the object side (convex side).

The multilayer film was formed by a vacuum vapor deposition method using an ion beam assist method using oxygen gas and argon gas as assist gases. Vapor disposition sources were formed of oxides presented in the tables, not including impurities that could be mixed unavoidably. The refractive index of SiO₂ presented in the tables is 1.46, the refractive index of ZrO₂ is 2.06, and the refractive index of Nb₂O₅ is 2.09. In addition, the thickness presented in the tables below is a value (unit: nm) obtained by converting the optical film thickness measured by the optical film thickness measuring device into the physical film thickness. The thickness of each layer was controlled by the deposition time.

In all of the Examples and Comparative Examples, after forming the vapor deposition film of the outermost layer, a water repellent layer was formed on the surface of the vapor deposition film of the outermost layer by performing vapor deposition with halogen heating by using a mixture prepared by mixing KY130 and KY 500, which are fluorine-substituted alkyl group-containing organosilicon compounds manufactured by Shin-Etsu Chemical Co., Ltd., in a mass percentage of 50%:50%.

Vapor deposition conditions at the time of forming each layer are shown below.

**[Table 1-1]**

| | | No. 1-1 to No. 1-4 |
|---|---|---|
| First layer | Vapor deposition source (in parentheses: vacuum degree in the chamber during vapor deposition) | ZrO₂ |
| | | (1.7 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Second layer | Vapor deposition source | SiO₂ |
| | (in parentheses: vacuum degree in the chamber during vapor deposition) | (1.2 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |
| Third layer | Vapor deposition source (in parentheses: vacuum degree in the chamber during vapor deposition) | ZrO₂ |
| | | (1.2 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Fourth layer | Vapor deposition source (in parentheses: vacuum degree in the chamber during vapor deposition) | SiO₂ |
| | | (1.2 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |

**[Table 1-2]**

| | | No. 2 |
|---|---|---|
| First layer | Vapor deposition source (in parentheses: vacuum degree in the chamber during vapor deposition) | ZrO₂ |
| | | (2.0 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Second layer | Vapor deposition source (in parentheses: vacuum degree in the chamber during vapor deposition) | SiO₂ |
| | | (1.4 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |
| Third layer | Vapor deposition source (in parentheses: vacuum degree in the chamber during vapor deposition) | ZrO₂ |
| | | (1.4 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Fourth layer | Vapor deposition source (in parentheses: vacuum degree in the chamber during vapor deposition) | SiO₂ |
| | | (1.3 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |

**[Table 1-3]**

| | | No. 3 |
|---|---|---|
| First layer | Vapor deposition source (in parentheses: vacuum degree in the chamber during vapor deposition) | ZrO₂ |
| | | (2.0 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Second layer | Vapor deposition source (in parentheses: vacuum degree in the chamber during vapor deposition) | SiO₂ |
| | | (1.4 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |
| Third layer | Vapor deposition source (in parentheses: vacuum degree in the chamber during vapor deposition) | ZrO₂ |
| | | (1.4 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Fourth layer | Vapor deposition source (in parentheses: vacuum degree in the chamber during vapor deposition) | SiO₂ |
| | | (1.3 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |

**[Table 1-4]**

| | | No. 4-1 to No. 4-5 |
|---|---|---|
| First layer | Vapor deposition source (in parentheses: vacuum degree in the chamber during vapor deposition) | ZrO₂ |
| | | (2.0 × 10⁻² Pa) |
| | Assist conditions: | 450 V, 225 mA, |
| | accelerating voltage, | O₂/Ar = 10 sccm/10 sccm |
| | accelerating current, assist gas flow rate | |
| Second layer | Vapor deposition source (in parentheses: vacuum degree in the chamber during vapor deposition) | SiO₂ |
| | | (1.4 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |
| Third layer | Vapor deposition source | ZrO₂ |
| | (in parentheses: vacuum degree in the chamber during vapor deposition) | (1.4 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Fourth layer | Vapor deposition source (in parentheses: vacuum degree in the chamber during vapor deposition) | SiO₂ |
| | | (1.3 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |

**[Table 1-5]**

| | | No. 5-1 to No. 5-5 |
|---|---|---|
| First layer | Vapor deposition source (in parentheses: vacuum degree in the chamber during vapor deposition) | ZrO₂ |
| | | (2.0 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Second layer | Vapor deposition source | SiO₂ |
| | (in parentheses: vacuum degree in the chamber during vapor deposition) | (1.4 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |
| Third layer | Vapor deposition source (in parentheses: vacuum degree in the chamber during vapor deposition) | ZrO₂ |
| | | (1.4 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Fourth layer | Vapor deposition source (in parentheses: vacuum degree in the chamber during vapor deposition) | SiO₂ |
| | | (1.3 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |

**[Table 1-6]**

| | | No. 6-1 to No. 6-5 |
|---|---|---|
| First layer | Vapor deposition source (in parentheses: vacuum degree in the chamber during vapor deposition) | ZrO₂ |
| | | (2.0 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Second layer | Vapor deposition source (in parentheses: vacuum degree in the chamber during vapor deposition) | SiO₂ |
| | | (1.4 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |
| Third layer | Vapor deposition source (in parentheses: vacuum degree in the chamber during vapor deposition) | ZrO₂ |
| | | (1.4 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Fourth layer | Vapor deposition source (in parentheses: vacuum degree in the chamber during vapor deposition) | SiO₂ |
| | | (1.3 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |

**[Table 1-7]**

| | | No. 7-1 to No. 7-5 |
|---|---|---|
| First layer | Vapor deposition source (in parentheses: vacuum degree in the chamber during vapor deposition) | ZrO₂ |
| | | (2.0 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Second layer | Vapor deposition source (in parentheses: vacuum degree in the chamber during vapor deposition) | SiO₂ |
| | | (1.4 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |
| Third layer | Vapor deposition source (in parentheses: vacuum degree in the chamber during vapor deposition) | ZrO₂ |
| | | (1.4 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Fourth layer | Vapor deposition source (in parentheses: vacuum degree in the chamber during vapor deposition) | SiO₂ |
| | | (1.3 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |

**[Table 1-8]**

| | | No. 8-1 to No. 8-5 |
|---|---|---|
| First layer | Vapor deposition source (in parentheses: vacuum degree in the chamber during vapor deposition) | ZrO₂ |
| | | (2.0 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Second layer | Vapor deposition source (in parentheses: vacuum degree in the chamber during vapor deposition) | SiO₂ |
| | | (1.4 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |
| Third layer | Vapor deposition source (in parentheses: vacuum degree in the chamber during vapor deposition) | ZrO₂ |
| | | (1.4 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Fourth layer | Vapor deposition source (in parentheses: vacuum degree in the chamber during vapor deposition) | SiO₂ |
| | | (1.3 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |

**[Table 1-9]**

| | | No. 9-1 to No. 9-5 |
|---|---|---|
| First layer | Vapor deposition source (in parentheses: vacuum degree in the chamber during vapor deposition) | ZrO₂ |
| | | (2.0 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Second layer | Vapor deposition source (in parentheses: vacuum degree in the chamber during vapor deposition) | SiO₂ |
| | | (1.4 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |
| Third layer | Vapor deposition source (in parentheses: vacuum degree in the chamber during vapor deposition) | ZrO₂ |
| | | (1.4 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Fourth layer | Vapor deposition source (in parentheses: vacuum degree in the chamber during vapor deposition) | SiO₂ |
| | | (1.3 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |

**[Table 1-10]**

| | | No. 10-1 to No. 10-5 |
|---|---|---|
| First layer | Vapor deposition source (in parentheses: vacuum degree in the chamber during vapor deposition) | ZrO₂ |
| | | (2.0 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Second layer | Vapor deposition source (in parentheses: vacuum degree in the chamber during vapor deposition) | SiO₂ |
| | | (1.4 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |
| Third layer | Vapor deposition source (in parentheses: vacuum degree in the chamber during vapor deposition) | ZrO₂ |
| | | (1.4 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| ITO layer | Vapor deposition source (in parentheses: vacuum degree in the chamber during vapor deposition) | ITO |
| | | (1.4 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Fourth layer | Vapor deposition source (in parentheses: vacuum degree in the chamber during vapor deposition) | SiO₂ |
| | | (1.3 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |

**[Table 1-11]**

| | | No. 11-1 to No. 11-5 |
|---|---|---|
| First layer | Vapor deposition source (in parentheses: vacuum degree in the chamber during vapor deposition) | Nb₂O₅ |
| | | (2.0 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Second layer | Vapor deposition source (in parentheses: vacuum degree in the chamber during vapor deposition) | SiO₂ |
| | | (1.4 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |
| Third layer | Vapor deposition source (in parentheses: vacuum degree in the chamber during vapor deposition) | Nb₂O₅ |
| | | (1.4 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Fourth layer | Vapor deposition source (in parentheses: vacuum degree in the chamber during vapor deposition) | SiO₂ |
| | | (1.3 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |

**[Table 1-12]**

| | | C1 to C7 |
|---|---|---|
| First layer | Vapor deposition source (in parentheses: vacuum degree in the chamber during vapor deposition) | ZrO₂ |
| | | (2.0 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Second layer | Vapor deposition source (in parentheses: vacuum degree in the chamber during vapor deposition) | SiO₂ |
| | | (1.4 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |
| Third layer | Vapor deposition source (in parentheses: vacuum degree in the chamber during vapor deposition) | ZrO₂ |
| | | (1.4 × 10⁻² Pa) |
| | Assist conditions: | 450 V, 225 mA, |
| | accelerating voltage, | O₂/Ar = 10 sccm/10 sccm |
| | accelerating current, | |
| | assist gas flow rate | |
| Fourth layer | Vapor deposition source (in parentheses: vacuum degree in the chamber during vapor deposition) | SiO₂ |
| | | (1.3 × 10⁻² Pa) |
| | Assist conditions: | 500 V, 250 mA, |
| | accelerating voltage, | O₂/Ar = 10 sccm/10 sccm |
| | accelerating current, | |
| | assist gas flow rate | |

The spectacle lenses obtained by the above steps, with the exception of spectacle lenses No. 10-1 to No. 10-5, have a multilayer film formed of a total of 4 layers arranged adjacently to each other in the order of a high refractive index material layer as the first layer, a low refractive index material layer as the second layer, a high refractive index material layer as the third layer, and a low refractive index material layer as the fourth layer on the object-side surface of a plastic lens base material with a hard coat layer or a hard coat layer and a primer layer interposed therebetween, and also have a water repellent layer formed on the multilayer film.

The spectacle lenses No. 10-1 to No. 10-5 have a multilayer film formed of a total of 4 layers arranged in the order of a high refractive index material layer as the first layer, a low refractive index material layer as the second layer, a high refractive index material layer as the third layer, and a low refractive index material layer as the fourth layer on the object-side surface of a plastic lens base material with a hard coat layer or a hard coat layer and a primer layer interposed therebetween, and also have an ITO layer (not counted as the layer of the multilayer film) having a thickness of 5.0 nm between the high refractive index material layer as the third layer and the low refractive index material layer as the fourth layer, and also have a water repellent layer formed on the multilayer film.

### [Method for Evaluating Heat Resistance]

A heat resistance temperature 1 and a heat resistance temperature 2 were measured by the following method. It can be evaluated that the multilayer film has excellent heat resistance when the measured heat resistance temperature is high. Since the heat resistance temperatures measured by the following method are also influenced by the lens base material, when considering heat resistance of the multilayer films of Examples and Comparative Examples, the heat resistance temperature 1 and the heat resistance temperature 2 of Examples and Comparative Examples using the same lens base material should be compared.

### (1) Measurement of Heat Resistance Temperature 1

The heat resistance temperature 1 of each spectacle lens of Examples and Comparative Examples was measured by the following method.

Each spectacle lens is put in the oven and heated for 50 min, and the presence or absence of cracks in the multilayer film is visually evaluated immediately after taking the spectacle lens out from the oven. Where cracks are not confirmed, the spectacle lens is put in the oven heated to a temperature which is 5°C (oven set temperature) higher than that of pervious heating and heated again for 50 min. The presence or absence of cracks in the multilayer film is visually evaluated immediately after taking the spectacle lens out from the oven.

The above evaluation is carried out by raising the heating temperature (oven set temperature) every 5°C from 50°C, and a heating temperature at the time when a crack is confirmed is defined as the heat resistance temperature 1 (unit: °C).

### (2) Measurement of Heat Resistance Temperature 2

The heat resistance temperature 2 of each spectacle lens of Examples and Comparative Examples was measured by the following method.

Each spectacle lens is put in the oven and heated for 50 min, and the presence or absence of cracks in the multilayer film is visually evaluated immediately after taking the spectacle lens out from the oven. Where cracks are not confirmed, the spectacle lens is put in the oven heated to a temperature which is 5°C (oven set temperature) higher than that of pervious heating and heated again for 50 min. The presence or absence of cracks in the multilayer film is visually evaluated immediately after taking the spectacle lens out from the oven.

The above evaluation is carried out by raising the heating temperature (oven set temperature) every 5°C from 50°C. Once a crack is observed in the multilayer film immediately after the spectacle lens was taken out from the oven, the spectacle lens is further allowed to stand at room temperature for 30 minutes and the presence or absence of cracks in the multilayer film is then visually evaluated. Here, when a crack is confirmed, this heating temperature is taken as the heat resistance temperature 2 (unit: °C). The heat resistance temperature 2 was evaluated up to a heating temperature of 120°C. Where the cracks were not observed in the multilayer film immediately after the spectacle lens taken out from the oven even at a heating temperature of 120°C, the heat resistance temperature 2 was evaluated to be over 120°C and it was shown as "Over 120" in the following tables.

The above evaluation results are shown in the following tables.

**[Table 2-1]**

| | | | No. 1-1 | No. 1-2 | No. 1-3 | No. 1-4 | No. 2 | No. 3 | C-1 | C-4 | C-5 | C-6 | C-7 |
|---|---|---|---|---|---|---|---|---|---|---|---|---|---|
| Vapor deposition source | First layer | | ZrO₂ | ZrO₂ | ZrO₂ | ZrO₂ | ZrO₂ | ZrO₂ | ZrO₂ | ZrO₂ | ZrO₂ | ZrO₂ | ZrO₂ |
| | Second layer | | SiO₂ | SiO₂ | SiO₂ | SiO₂ | SiO₂ | SiO₂ | SiO₂ | SiO₂ | SiO₂ | SiO₂ | SiO₂ |
| | Third layer | | ZrO₂ | ZrO₂ | ZrO₂ | ZrO₂ | ZrO₂ | ZrO₂ | ZrO₂ | ZrO₂ | ZrO₂ | ZrO₂ | ZrO₂ |
| | Fourth layer | | SiO₂ | SiO₂ | SiO₂ | SiO₂ | SiO₂ | SiO₂ | SiO₂ | SiO₂ | SiO₂ | SiO₂ | SiO₂ |
| Thickness | First layer | | 26.0 | 26.0 | 26.0 | 26.0 | 30.0 | 26.0 | 26.0 | 26.0 | 26.0 | 26.0 | 26.0 |
| | Second layer | | 13.4 | 13.4 | 13.4 | 13.4 | 13.4 | 7.4 | 23.4 | 23.4 | 23.4 | 23.4 | 23.4 |
| | Third layer | | 87.7 | 87.7 | 87.7 | 87.7 | 96.7 | 87.7 | 71.7 | 71.7 | 71.7 | 71.7 | 71.7 |
| | Fourth layer | | 85.4 | 85.4 | 85.4 | 85.4 | 85.4 | 80.4 | 91.4 | 91.4 | 91.4 | 91.4 | 91.4 |
| Total thickness of low refractive index material layers TB (nm) | | | 98.8 | 98.8 | 98.8 | 98.8 | 98.8 | 87.8 | 114.8 | 114.8 | 114.8 | 114.8 | 114.8 |
| Total thickness of high refractive index material layers TA (nm) | | | 113.7 | 113.7 | 113.7 | 113.7 | 126.7 | 113.7 | 97.7 | 97.7 | 97.7 | 97.7 | 97.7 |
| Total thickness of multilayer film (nm) | | | 212.5 | 212.5 | 212.5 | 212.5 | 225.5 | 201.5 | 212.5 | 212.5 | 212.5 | 212.5 | 212.5 |
| Difference between maximum thickness Ta of high refractive index material layers and maximum thickness Tb of low refractive index material layers (nm) | | | 2.3 | 2.3 | 2.3 | 2.3 | 11.3 | 7.3 | -19.7 | -19.7 | -19.7 | -19.7 | -19.7 |
| Difference between total thickness TA of high refractive index material layers and total thickness TB of low refractive index material layers (nm) | | | 14.9 | 14.9 | 14.9 | 14.9 | 27.9 | 25.9 | -17.1 | -17.1 | -17.1 | -17.1 | -17.1 |
| Heat resistance temperature 1 | Refractive index of lens base material | 1.50 | 100 | | | | | | 95 | | | | |
| | | 1.60 | | 130 | | | 130 | | | 120 | | | |
| | | 1.67 | | | 115 | | | 115 | | | 105 | | |
| | | 1.74 | | | | 90 | | | | | | | 85 |

**[Table 2-2]**

| | | | No. 4-1 | No. 4-2 | No. 4-3 | No. 4-4 | No. 4-5 | No. 5-1 | No. 5-2 | No. 5-3 | No. 5-4 | No. 5-5 |
|---|---|---|---|---|---|---|---|---|---|---|---|---|
| Vapor deposition source | First layer | | ZrO₂ | ZrO₂ | ZrO₂ | ZrO₂ | ZrO₂ | ZrO₂ | ZrO₂ | ZrO₂ | ZrO₂ | ZrO₂ |
| | Second layer | | SiO₂ | SiO₂ | SiO₂ | SiO₂ | SiO₂ | SiO₂ | SiO₂ | SiO₂ | SiO₂ | SiO₂ |
| | Third layer | | ZrO₂ | ZrO₂ | ZrO₂ | ZrO₂ | ZrO₂ | ZrO₂ | ZrO₂ | ZrO₂ | ZrO₂ | ZrO₂ |
| | Fourth layer | | SiO₂ | SiO₂ | SiO₂ | SiO₂ | SiO₂ | SiO₂ | SiO₂ | SiO₂ | SiO₂ | SiO₂ |
| Thickness | First layer | | 24.0 | 24.0 | 24.0 | 24.0 | 24.0 | 25.0 | 25.0 | 25.0 | 25.0 | 25.0 |
| | Second layer | | 15.2 | 15.2 | 15.2 | 15.2 | 15.2 | 14.6 | 14.6 | 14.6 | 14.6 | 14.6 |
| | Third layer | | 87.7 | 87.7 | 87.7 | 87.7 | 87.7 | 87.7 | 87.7 | 87.7 | 87.7 | 87.7 |
| | Fourth layer | | 86.5 | 86.5 | 86.5 | 86.5 | 86.5 | 86.1 | 86.1 | 86.1 | 86.1 | 86.1 |
| Total thickness of low refractive index material layers TB (nm) | | | 101.7 | 101.7 | 101.7 | 101.7 | 101.7 | 100.7 | 100.7 | 100.7 | 100.7 | 100.7 |
| Total thickness of high refractive index material layers TA (nm) | | | 111.7 | 111.7 | 111.7 | 111.7 | 111.7 | 112.7 | 112.7 | 112.7 | 112.7 | 112.7 |
| Total thickness of multilayer film (nm) | | | 213.4 | 213.4 | 213.4 | 213.4 | 213.4 | 213.4 | 213.4 | 213.4 | 213.4 | 213.4 |
| Difference between maximum thickness Ta of high refractive index material layers and maximum thickness Tb of low refractive index material layers (nm) | | | 1.2 | 1.2 | 1.2 | 1.2 | 1.2 | 1.6 | 1.6 | 1.6 | 1.6 | 1.6 |
| Difference between total thickness TA of high refractive index material layers and total thickness TB of low refractive index material layers (nm) | | | 10.0 | 10.0 | 10.0 | 10.0 | 10.0 | 12.0 | 12.0 | 12.0 | 12.0 | 12.0 |
| Heat resistance temperature 2 | Refractive index of lens base material | 1.50 | 110 | | | | | 105 | | | | |
| | | 1.53 | | 115 | | | | | 115 | | | |
| | | 1.59 | | | Over 120 | | | | | Over 120 | | |
| | | 1.60 | | | | 125 | | | | | 125 | |
| | | 1.67 | | | | | 120 | | | | | 115 |

**[Table 2-3]**

| | | | No. 6-1 | No. 6-2 | No. 6-3 | No. 6-4 | No. 6-5 | No. 7-1 | No. 7-2 | No. 7-3 | No. 7-4 | No. 7-5 |
|---|---|---|---|---|---|---|---|---|---|---|---|---|
| Vapor deposition source | First layer | | ZrO₂ | ZrO₂ | ZrO₂ | ZrO₂ | ZrO₂ | ZrO₂ | ZrO₂ | ZrO₂ | ZrO₂ | ZrO₂ |
| | Second layer | | SiO₂ | SiO₂ | SiO₂ | SiO₂ | SiO₂ | SiO₂ | SiO₂ | SiO₂ | SiO₂ | SiO₂ |
| | Third layer | | ZrO₂ | ZrO₂ | ZrO₂ | ZrO₂ | ZrO₂ | ZrO₂ | ZrO₂ | ZrO₂ | ZrO₂ | ZrO₂ |
| | Fourth layer | | SiO₂ | SiO₂ | SiO₂ | SiO₂ | SiO₂ | SiO₂ | SiO₂ | SiO₂ | SiO₂ | SiO₂ |
| Thickness | First layer | | 33.0 | 33.0 | 33.0 | 33.0 | 33.0 | 18.0 | 18.0 | 18.0 | 18.0 | 18.0 |
| | Second layer | | 8.0 | 8.0 | 8.0 | 8.0 | 8.0 | 18.0 | 18.0 | 18.0 | 18.0 | 18.0 |
| | Third layer | | 87.7 | 87.7 | 87.7 | 87.7 | 87.7 | 92.4 | 92.4 | 92.4 | 92.4 | 92.4 |
| | Fourth layer | | 84.7 | 84.7 | 84.7 | 84.7 | 84.7 | 78.4 | 78.4 | 78.4 | 78.4 | 78.4 |
| Total thickness of low refractive index material layers TB (nm) | | | 92.7 | 92.7 | 92.7 | 92.7 | 92.7 | 96.4 | 96.4 | 96.4 | 96.4 | 96.4 |
| Total thickness of high refractive index material layers TA (nm) | | | 120.7 | 120.7 | 120.7 | 120.7 | 120.7 | 110.4 | 110.4 | 110.4 | 110.4 | 110.4 |
| Total thickness of multilayer film (nm) | | | 213.4 | 213.4 | 213.4 | 213.4 | 213.4 | 206.8 | 206.8 | 206.8 | 206.8 | 206.8 |
| Difference between maximum thickness Ta of high refractive index material layers and maximum thickness Tb of low refractive index material layers (nm) | | | 3.0 | 3.0 | 3.0 | 3.0 | 3.0 | 14.0 | 14.0 | 14.0 | 14.0 | 14.0 |
| Difference between total thickness TA of high refractive index material layers and total thickness TB of low refractive index material layers (nm) | | | 28.0 | 28.0 | 28.0 | 28.0 | 28.0 | 14.0 | 14.0 | 14.0 | 14.0 | 14.0 |
| Heat resistance temperature 2 | Refractive index of lens base material | 1.50 | 105 | | | | | 100 | | | | |
| | | 1.53 | | 115 | | | | | 115 | | | |
| | | 1.59 | | | Over 120 | | | | | Over 120 | | |
| | | 1.60 | | | | 125 | | | | | 125 | |
| | | 1.67 | | | | | 115 | | | | | 115 |

**[Table 2-4]**

| | | | No. 8-1 | No. 8-2 | No. 8-3 | No. 8-4 | No. 8-5 | No. 9-1 | No. 9-2 | No. 9-3 | No. 9-4 | No. 9-5 |
|---|---|---|---|---|---|---|---|---|---|---|---|---|
| Vapor deposition source | First layer | | ZrO₂ | ZrO₂ | ZrO₂ | ZrO₂ | ZrO₂ | ZrO₂ | ZrO₂ | ZrO₂ | ZrO₂ | ZrO₂ |
| | Second layer | | SiO₂ | SiO₂ | SiO₂ | SiO₂ | SiO₂ | SiO₂ | SiO₂ | SiO₂ | SiO₂ | SiO₂ |
| | Third layer | | ZrO₂ | ZrO₂ | ZrO₂ | ZrO₂ | ZrO₂ | ZrO₂ | ZrO₂ | ZrO₂ | ZrO₂ | ZrO₂ |
| | Fourth layer | | SiO₂ | SiO₂ | SiO₂ | SiO₂ | SiO₂ | SiO₂ | SiO₂ | SiO₂ | SiO₂ | SiO₂ |
| Thickness | First layer | | 27.0 | 27.0 | 27.0 | 27.0 | 27.0 | 27.0 | 27.0 | 27.0 | 27.0 | 27.0 |
| | Second layer | | 11.0 | 11.0 | 11.0 | 11.0 | 11.0 | 11.0 | 11.0 | 11.0 | 11.0 | 11.0 |
| | Third layer | | 94.4 | 94.4 | 94.4 | 94.4 | 94.4 | 100.0 | 100.0 | 100.0 | 100.0 | 100.0 |
| | Fourth layer | | 76.4 | 76.4 | 76.4 | 76.4 | 76.4 | 72.0 | 72.0 | 72.0 | 72.0 | 72.0 |
| Total thickness of low refractive index material layers TB (nm) | | | 87.4 | 87.4 | 87.4 | 87.4 | 87.4 | 83.0 | 83.0 | 83.0 | 83.0 | 83.0 |
| Total thickness of high refractive index material layers TA (nm) | | | 121.4 | 121.4 | 121.4 | 121.4 | 121.4 | 127.0 | 127.0 | 127.0 | 127.0 | 127.0 |
| Total thickness of multilayer film (nm) | | | 208.8 | 208.8 | 208.8 | 208.8 | 208.8 | 210.0 | 210.0 | 210.0 | 210.0 | 210.0 |
| Difference between maximum thickness Ta of high refractive index material layers and maximum thickness Tb of low refractive index material layers (nm) | | | 18.0 | 18.0 | 18.0 | 18.0 | 18.0 | 28.0 | 28.0 | 28.0 | 28.0 | 28.0 |
| Difference between total thickness TA of high refractive index material layers and total thickness TB of low refractive index material layers (nm) | | | 34.0 | 34.0 | 34.0 | 34.0 | 34.0 | 44.0 | 44.0 | 44.0 | 44.0 | 44.0 |
| Heat resistance temperature 2 | Refractive index of lens base material | 1.50 | 100 | | | | | 100 | | | | |
| | | 1.53 | | 110 | | | | | 110 | | | |
| | | 1.59 | | | Over 120 | | | | | Over 120 | | |
| | | 1.60 | | | | 125 | | | | | 125 | |
| | | 1.67 | | | | | 110 | | | | | 110 |

**[Table 2-5]**

| | | | No. 10-1 | No. 10-2 | No. 10-3 | No. 10-4 | No. 10-5 |
|---|---|---|---|---|---|---|---|
| Vapor deposition source | First layer | | ZrO₂ | ZrO₂ | ZrO₂ | ZrO₂ | ZrO₂ |
| | Second layer | | SiO₂ | SiO₂ | SiO₂ | SiO₂ | SiO₂ |
| | Third layer | | ZrO₂ | ZrO₂ | ZrO₂ | ZrO₂ | ZrO₂ |
| | ITO layer | | ITO | ITO | ITO | ITO | ITO |
| | Fourth layer | | SiO₂ | SiO₂ | SiO₂ | SiO₂ | SiO₂ |
| Thickness | First layer | | 26.0 | 26.0 | 26.0 | 26.0 | 26.0 |
| | Second layer | | 13.4 | 13.4 | 13.4 | 13.4 | 13.4 |
| | Third layer | | 87.7 | 87.7 | 87.7 | 87.7 | 87.7 |
| | ITO layer | | 5.0 | 5.0 | 5.0 | 5.0 | 5.0 |
| | Fourth layer | | 85.4 | 85.4 | 85.4 | 85.4 | 85.4 |
| Total thickness of low refractive index material layers TB (nm) | | | 98.8 | 98.8 | 98.8 | 98.8 | 98.8 |
| Total thickness of high refractive index material layers TA (nm) | | | 113.7 | 113.7 | 113.7 | 113.7 | 113.7 |
| Total thickness of multilayer film (nm) | | | 212.5 | 212.5 | 212.5 | 212.5 | 212.5 |
| Difference between maximum thickness Ta of high refractive index material layers and maximum thickness Tb of low refractive index material layers (nm) | | | 2.3 | 2.3 | 2.3 | 2.3 | 2.3 |
| Difference between total thickness TA of high refractive index material layers and total thickness TB of low refractive index material layers (nm) | | | 14.9 | 14.9 | 14.9 | 14.9 | 14.9 |
| Heat resistance temperature 2 | Refractive index of lens base material | 1.50 | 110 | | | | |
| | | 1.53 | | 115 | | | |
| | | 1.59 | | | Over 120 | | |
| | | 1.60 | | | | 125 | |
| | | 1.67 | | | | | 115 |

**[Table 2-6]**

| | | | No. 11-1 | No. 11-2 | No. 11-3 | No. 11-4 | No. 11-5 |
|---|---|---|---|---|---|---|---|
| Vapor deposition source | First layer | | Nb₂O₅ | Nb₂O₅ | Nb₂O₅ | Nb₂O₅ | Nb₂O₅ |
| | Second layer | | SiO₂ | SiO₂ | SiO₂ | SiO₂ | SiO₂ |
| | Third layer | | ZrO₂ | ZrO₂ | ZrO₂ | ZrO₂ | ZrO₂ |
| | Fourth layer | | SiO₂ | SiO₂ | SiO₂ | SiO₂ | SiO₂ |
| Thickness | First layer | | 26.0 | 26.0 | 26.0 | 26.0 | 26.0 |
| | Second layer | | 13.4 | 13.4 | 13.4 | 13.4 | 13.4 |
| | Third layer | | 87.7 | 87.7 | 87.7 | 87.7 | 87.7 |
| | Fourth layer | | 85.4 | 85.4 | 85.4 | 85.4 | 85.4 |
| Total thickness of low refractive index material layers TB (nm) | | | 98.8 | 98.8 | 98.8 | 98.8 | 98.8 |
| Total thickness of high refractive index material layers TA (nm) | | | 113.7 | 113.7 | 113.7 | 113.7 | 113.7 |
| Total thickness of multilayer film (nm) | | | 212.5 | 212.5 | 212.5 | 212.5 | 212.5 |
| Difference between maximum thickness Ta of high refractive index material layers and maximum thickness Tb of low refractive index material layers (nm) | | | 2.3 | 2.3 | 2.3 | 2.3 | 2.3 |
| Difference between total thickness TA of high refractive index material layers and total thickness TB of low refractive index material layers (nm) | | | 14.9 | 14.9 | 14.9 | 14.9 | 14.9 |
| Heat resistance temperature 2 | Refractive index of lens base material | 1.50 | Over 120 | | | | |
| | | 1.53 | | Over 120 | | | |
| | | 1.59 | | | Over 120 | | |
| | | 1.60 | | | | Over 120 | |
| | | 1.67 | | | | | Over 120 |

**[Table 2-7]**

| | | | C-1 | C-2 | C-3 | C-4 | C-5 |
|---|---|---|---|---|---|---|---|
| Vapor deposition source | First layer | | ZrO₂ | ZrO₂ | ZrO₂ | ZrO₂ | ZrO₂ |
| | Second layer | | SiO₂ | SiO₂ | SiO₂ | SiO₂ | SiO₂ |
| | Third layer | | ZrO₂ | ZrO₂ | ZrO₂ | ZrO₂ | ZrO₂ |
| | Fourth layer | | SiO₂ | SiO₂ | SiO₂ | SiO₂ | SiO₂ |
| Thickness | First layer | | 26.0 | 26.0 | 26.0 | 26.0 | 26.0 |
| | Second layer | | 23.4 | 23.4 | 23.4 | 23.4 | 23.4 |
| | Third layer | | 71.7 | 71.7 | 71.7 | 71.7 | 71.7 |
| | Fourth layer | | 91.4 | 91.4 | 91.4 | 91.4 | 91.4 |
| Total thickness of low refractive index material layers TB (nm) | | | 114.8 | 114.8 | 114.8 | 114.8 | 114.8 |
| Total thickness of high refractive index material layers TA (nm) | | | 97.7 | 97.7 | 97.7 | 97.7 | 97.7 |
| Total thickness of multilayer film (nm) | | | 212.5 | 212.5 | 212.5 | 212.5 | 212.5 |
| Difference between maximum thickness Ta of high refractive index material layers and maximum thickness Tb of low refractive index material layers (nm) | | | -19.7 | -19.7 | -19.7 | -19.7 | -19.7 |
| Difference between total thickness TA of high refractive index material layers and total thickness TB of low refractive index material layers (nm) | | | -17.1 | -17.1 | -17.1 | -17.1 | -17.1 |
| Heat resistance temperature 2 | Refractive index of lens base material | 1.50 | 95 | | | | |
| | | 1.53 | | 105 | | | |
| | | 1.59 | | | 120 | | |
| | | 1.60 | | | | 120 | |
| | | 1.67 | | | | | 110 |

As shown in the tables hereinabove, the multilayer films of the spectacle lenses of Examples have higher heat resistance temperature than the multilayer films of the spectacle lenses of Comparative Examples using the same lens base material. That is, the multilayer films in the spectacle lenses of Examples are superior in heat resistance to the multilayer films in the spectacle lenses of Comparative Examples. In the multilayer films in the spectacle lenses of Comparative Examples, the maximum thickness of the low refractive index material layers is larger than the maximum thickness of the high refractive index material layers. In contrast, in the multilayer films in the spectacle lenses of Examples, the maximum thickness of the high refractive index material layers is larger than the maximum thickness of the low refractive index material layers. The inventors of the present invention presume that this difference brings about a difference in heat resistance.

Furthermore, the spectacle lenses of Examples also showed satisfactory results (evaluation results UA or A) in an alkali resistance test in which the surface on the multilayer film side was evaluated by the following method.

### [Method for Evaluating Alkali Resistance]

After immersing the spectacle lens of Example in a 10% by mass sodium hydroxide aqueous solution (liquid temperature 20°C) for 1 h, the surface state on the multilayer film side was visually observed. From the observation results, alkali resistance was evaluated according to the following criteria.
UA: almost no change caused by immersion;
A: there are several dot-shaped film peelings in the multilayer film;
B: dot-shaped film peeling occurred on the entire surface of the multilayer film;
C: dot-shaped film peeling occurred on the entire surface of the multilayer film, and there were also several planar film peelings; and
D: peeling occurred on almost the entire surface of the multilayer film.

In addition, the spectacle lenses of Examples also showed satisfactory results (evaluation result UA) in a durability test in which the surface of the multilayer film side was evaluated by the following method.

### [Method for Evaluating Durability]

Steel wool under a load of 1 kg was reciprocated 20 times on the object-side surface (on the surface having the multilayer film) of the spectacle lenses of Examples, and the degree of scratches on the surface of the multilayer film was visually observed. From the observation results, durability was evaluated according to the following criteria.
UA: no scratches are observed on the surface of the multilayer film;
A: very few shallow scratches are observed on the surface of the multilayer film;
B: one or two linear scratches are observed on the surface of the multilayer film;
C: three or more linear scratches are observed on the surface of the multilayer film; and
D: the multilayer film surface is severely damaged.

Further, as a result of evaluating the reflection characteristics of the spectacle lenses of Examples, it was also confirmed that the multilayer films of the spectacle lenses of Examples function as antireflection films showing antireflection properties against light in the visible region.

Finally, the above-described embodiments are summarized.

According to one aspect, there is provided a spectacle lens having a multilayer film disposed on a surface of a lens base material directly or via one or more other layers, wherein the multilayer film includes a plurality of high refractive index material layers and a plurality of low refractive index material layers; and the thickness of the thickest high refractive index material layer among the plurality of high refractive index material layers is larger than the thickness of the thickest low refractive index material layer among the plurality of low refractive index material layers.

The multilayer film in the spectacle lens can exhibit excellent heat resistance. Therefore, in the spectacle lens, deterioration of appearance quality caused by occurrence of cracks in the multilayer film due to storage or use at high temperature can be suppressed.

In one embodiment, the total thickness of the plurality of high refractive index material layers is larger than the total thickness of the plurality of low refractive index material layers.

In one embodiment, the plurality of high refractive index material layers and the plurality of low refractive index material layers included in the multilayer film are formed of 4 layers below from the side close to the lens base material to the side far from the lens base material: a high refractive index material layer, which is a first layer, a low refractive index material layer, which is a second layer, a high refractive index material layer, which is a third layer, and a low refractive index material layer, which is a fourth layer.

In one embodiment, the high refractive index material layer, which is the third layer is the thickest high refractive index material layer among the plurality of high refractive index material layers.

In one embodiment, each of the plurality of high refractive index material layers is a vapor deposited film of zirconium oxide.

In one embodiment, each of the plurality of high refractive index material layers is a vapor deposited film of niobium oxide.

In one embodiment, each of the plurality of low refractive index material layers is a vapor deposited film of silicon oxide.

In one embodiment, the plurality of high refractive index material layers and the plurality of low refractive index material layers included in the multilayer film are formed of 4 layers of a vapor deposited film of zirconium oxide which is the high refractive index material layer as the first layer, a vapor deposited film of silicon oxide which is the low refractive index material layer as the second layer, a vapor deposited film of zirconium oxide which is the high refractive index material layer as the third layer, and a vapor deposited film of silicon oxide which is the low refractive index material layer as the fourth layer. In one embodiment, the vapor deposited film of zirconium oxide as the third layer is the thickest high refractive index material layer among the plurality of high refractive index material layers.

In one embodiment, the plurality of high refractive index material layers and the plurality of low refractive index material layers included in the multilayer film are formed of 4 layers of a vapor deposited film of niobium oxide which is the high refractive index material layer as the first layer, a vapor deposited film of silicon oxide which is the low refractive index material layer as the second layer, a vapor deposited film of niobium oxide which is the high refractive index material layer as the third layer, and a vapor deposited film of silicon oxide which is the low refractive index material layer as the fourth layer. In one embodiment, the vapor deposited film of niobium oxide as the third layer is the thickest high refractive index material layer among the plurality of high refractive index material layers.

In one embodiment, a difference (Ta - Tb) between a thickness Ta of the thickest high refractive index material layer among the plurality of high refractive index material layers and a thickness Tb of the thickest low refractive index material layer among the plurality of low refractive index material layers is 1.0 nm or more and 30.0 nm or less.

In one embodiment, the difference (Ta - Tb) is 1.0 nm or more and 10.0 nm or less.

According to another aspect, there is also provided spectacles having the spectacle lens and a frame to which the spectacle lens is attached.

Since the spectacles includes the spectacle lens having the multilayer film capable of exhibiting excellent heat resistance, it is possible to suppress the deterioration of appearance quality of the spectacle lens caused by generation of cracks in the multilayer film due to storage or use at a high temperature, and therefore the deterioration of appearance quality of the spectacles can be suppressed.

Two or more of the various embodiments described in this specification can be combined in any combination.

It should be understood that the embodiments disclosed herein are exemplary in all respects and are not restrictive. The scope of the present invention is indicated not by the above description but by the claims and is intended to include meanings equivalent to claims and all changes within the scope of the claims.

The present invention is useful in the fields of manufacturing spectacle lenses and spectacles.

## Claims

1. A spectacle lens having a multilayer film disposed on a surface of a lens base material directly or via one or more other layers, wherein
the multilayer film includes a plurality of high refractive index material layers and a plurality of low refractive index material layers; and
a thickness of the thickest high refractive index material layer among the plurality of high refractive index material layers is larger than a thickness of the thickest low refractive index material layer among the plurality of low refractive index material layers.

2. The spectacle lens according to claim 1, wherein a total thickness of the plurality of high refractive index material layers is larger than a total thickness of the plurality of low refractive index material layers.

3. The spectacle lens according to claim 1 or 2, wherein the plurality of high refractive index material layers and the plurality of low refractive index material layers included in the multilayer film are formed of 4 layers below from the side close to the lens base material to the side far from the lens base material:
a high refractive index material layer, which is a first layer,
a low refractive index material layer, which is a second layer,
a high refractive index material layer, which is a third layer, and
a low refractive index material layer, which is a fourth layer.

4. The spectacle lens according to claim 3, wherein the high refractive index material layer, which is the third layer, is the thickest high refractive index material layer among the plurality of high refractive index material layers.

5. The spectacle lens according to any one of claims 1 to 4, wherein each of the plurality of high refractive index material layers is a vapor deposited film of zirconium oxide.

6. The spectacle lens according to any one of claims 1 to 4, wherein each of the plurality of high refractive index material layers is a vapor deposited film of niobium oxide.

7. The spectacle lens according to any one of claims 1 to 6, wherein each of the plurality of low refractive index material layers is a vapor deposited film of silicon oxide.

8. The spectacle lens according to any one of claims 1 to 7, wherein a difference (Ta - Tb) between a thickness Ta of the thickest high refractive index material layer among the plurality of high refractive index material layers and a thickness Tb of the thickest low refractive index material layer among the plurality of low refractive index material layers is 1.0 nm or more and 30.0 nm or less.

9. The spectacle lens according to claim 8, wherein the difference (Ta - Tb) is 1.0 nm or more and 10.0 nm or less.

10. Spectacles having the spectacle lens according to any one of claims 1 to 9, and a frame to which the spectacle lens is attached.
